# EUROPEAN PATENT APPLICATION

(11) **EP 0 614 139 A2**
(43) Date of publication of application: **07.09.1994**
(21) Application number: 94101189.2
(22) Date of filing: 27.01.1994
(51) Int. Cl.: G06F 9/46, G06F 9/40

(54) **External procedure call for distributed processing environment**

(30) Priority: 04.03.1993 US 26397
(71) Applicant: International Business Machines Corporation, Armonk, N.Y. 10504 (US)
(72) Inventor: Giampapa, Mark Edwin, Irvington, New York 10533-1240 (US); Blake Gordon Fitch, New Rochelle, New York 10804, (US); Franke, Hubertus, Croton-on-Hudson, New York 10520 (US)
(74) Representative: Schäfer, Wolfgang, Dipl.-Ing.

(57) **Abstract**

An eXternal Procedure Call (XPC) is a function in a distributed processing environment which allows a procedure local to or remote from a calling process to be called and executed (and, if appropriate, the results return to the calling process) without performing a full context switch between processes, either locally or remotely. This is accomplished by associating a subroutine with each processing node of the distributed processing environment. The subroutine is coded so that it can be directly accessed and executed within each processing thread of the parallel job.

## Description

### Technical Field

The present invention relates in general to data processing environments, and in particular, to techniques for making peer-to-peer procedure calls (both local and remote) to a callee process without employing a process context switch.

### Background Art

Parallel operating environments provide facilities for making procedure calls, whereby reusable code is placed in a defined location and executed when needed. Parameters can be passed to called procedures, and results returned. As used herein, the term "procedure" should be read in a generic sense and may be called in particular instances a function, a subroutine or a program segment. Programs which are referred to as processes contain or include functions, subroutines and/or procedures.

One well known method for making procedure calls is referenced in the art as Remote Procedure Call (RPC). Essentially, RPC allows programs to call procedures located on other processors in a distributed data processing environment. When a process on machine A calls a process on machine B, the calling process on A is suspended, and the execution of a call-to-procedure takes place on machine B. Information is then transported from the caller to the callee in the parameters, and is returned in the procedure result. No message passing or I/O is visible to the application program. RPC is a widely-used technique that underlies many of today's distributed operating systems.

A full context switch is required between processes to handle the RPC because a caller process and a callee process are different processes, even if the particular process targeted by an RPC is on the same (referred to herein as "local") processor as the process requesting the RPC. Similarly, when a targeted server process is instead on a different (referred to herein as "remote") processor a full context switch is needed between processes at the remote processor as well as at the local processor. A full process context switch, whether local or remote, consumes considerable processing overhead.

Thus, a new procedure call technique which allows a procedure, whether local or remote from a calling process, to be called and executed (and results returned to the calling process) without requiring a full context switch between processes would comprise a significant advancement in today's distributed processing environment.

### Disclosure of The Invention

Briefly described, the present invention comprises in one aspect a process for executing a procedure at a target thread associated with one of a plurality of tasks comprising a parallel process. The procedure executing process is implemented within a distributed processing environment having multiple processing nodes for parallel processing of multiple tasks. The process includes: preassociating call/execute procedure code with each processing node of the distributed processing environment such that at each node at least one thread being processed can directly access the call/execute procedure code without requiring a task context switch; executing a requestor thread at one of the processing nodes, wherein the requestor thread calls for execution of the procedure at the target thread; and executing the called procedure at the target thread by accessing the call/execute procedure code preassociated with the node processing the target thread such that the called procedure is executed within the target thread without employing context switching between different tasks of the parallel process. The term "preassociating" herein shall mean the preassociated code is accessible either via a subroutine call or is actually available as in-line code.

In another aspect, a process for executing a procedure at a target thread comprising one of multiple threads of a parallel job is provided. The procedure executing process is implemented within a parallel processing environment having multiple processing nodes. In one embodiment, the process includes the steps of: associating call/execute procedure code with each processing node of the parallel processing environment such that at least one thread of the parallel job executed by any processing node within the processing environment can directly access the call/execute procedure code, which means that the call/execute procedure code (or a copy thereof) is located within the process executing at the processing node; allocating a request message buffer and a response message buffer to each thread of the parallel job; and, in response to a requestor thread loading its allocated request message buffer with parameters calling for execution of the procedure at the target thread, executing the call/execute procedure code associated with the processing node executing the target thread. Executing of the call/execute procedure code includes processing the code from within the target thread such that the procedure is executed without employing context switching between different tasks of the parallel job.

In a further aspect, a system for executing a procedure at a target thread is set forth. The system includes a distributed processing environment having multiple processing nodes for processing in parallel a parallel job having a plurality of threads. An operating kernel is associated with each processing node of the distributed processing environment. Call procedure code is contained at each kernel of the distributed processing environment so that the procedure code can be directly called at each processing node by any thread executing thereon without requiring a task context switch. A unique request message buffer and response message buffer are allocated to each thread of the parallel job. A loading mechanism provides parameters to the requestor thread's request message buffer upon execution of a procedure call request by the requestor thread. A transfer mechanism is provided to move these loaded parameters into the request message buffer of the target thread, assuming remote processing. Finally, upon receipt of the loaded parameters, the target thread is provided with means for executing the call procedure code from within the target thread without a task context switch.

To summarize, a novel eXternal Procedure Call (XPC) is provided herein which accomplishes the same function as a standard RPC without the overhead of making a full context switch between processes. When an XPC is handled locally (i.e., at the processing node executing the requestor thread), not even a thread context switch is required. When the XPC is handled remotely, at most only a thread context switch is needed, which is much less costly in terms of processing overhead than a full process context switch, such as that required by an RPC. An XPC is essentially a peer-to-peer procedure call.

### Brief Description of The Drawings

These and other objects, advantages and features of the present invention will be more readily understood from the following detailed description of certain preferred embodiments of the present invention, when considered in conjunction with the accompanying drawings in which:
- Fig. 1: generally depicts one embodiment of a parallel data processing environment to incorporate the present invention;
- Fig. 2: is a representation of several processing nodes, interconnected through a communications interface, in a parallel data processing environment to incorporate the present invention;
- Fig. 3: depicts one embodiment of address space assignment for several distributed memory, parallel processing nodes to utilize the present invention;
- Fig. 4: partially depicts one embodiment of a distributed memory processing system pursuant to the present invention;
- Figs. 5a-5c: comprise sample data structures for a request message, response message, and status bits, respectively, pursuant to the present invention; and
- Fig. 6: is a general overview of request processing pursuant to an external Procedure Call (XPC) subroutine in accordance with the present invention.

### Best Mode For Carrying Out The Invention

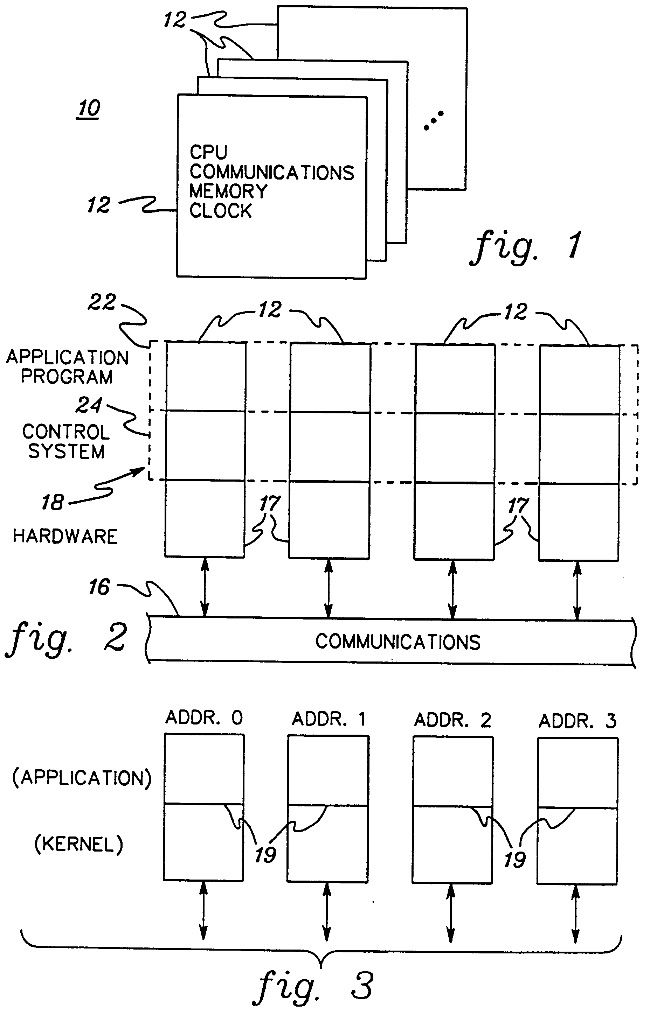

Fig. 1 is a simplified embodiment of a parallel data processing environment, generally denoted 10, having an array of processing nodes 12. Each processing node 12 may be implemented in hardware, a combination of hardware and software, or principally software (e.g., a virtual processing node). Taken together, processing nodes 12 provide a distributed machine environment within which data processing functions are executed. In one standard embodiment, each processing node 12 includes a CPU, a communications interface, memory and a clocking mechanism.

Within an array of processing nodes, the nodes typically communicate via high priority messages and low priority messages. By way of example, four processing nodes 12 (or processing stacks) are shown in Fig. 2 to be coupled to a communications interface 16 for bi-directional transfer of data therebetween. In this embodiment, each processing node 12 includes a software component 18 and a hardware component 17, which together form a processing stack. Software 18 includes an application program 22 and a control system or kernel 24. Each control system or kernel 24 inherently understands that it is part of a larger system, i.e., a parallel data processing environment. The kernels control the flow of information between processing nodes 12.

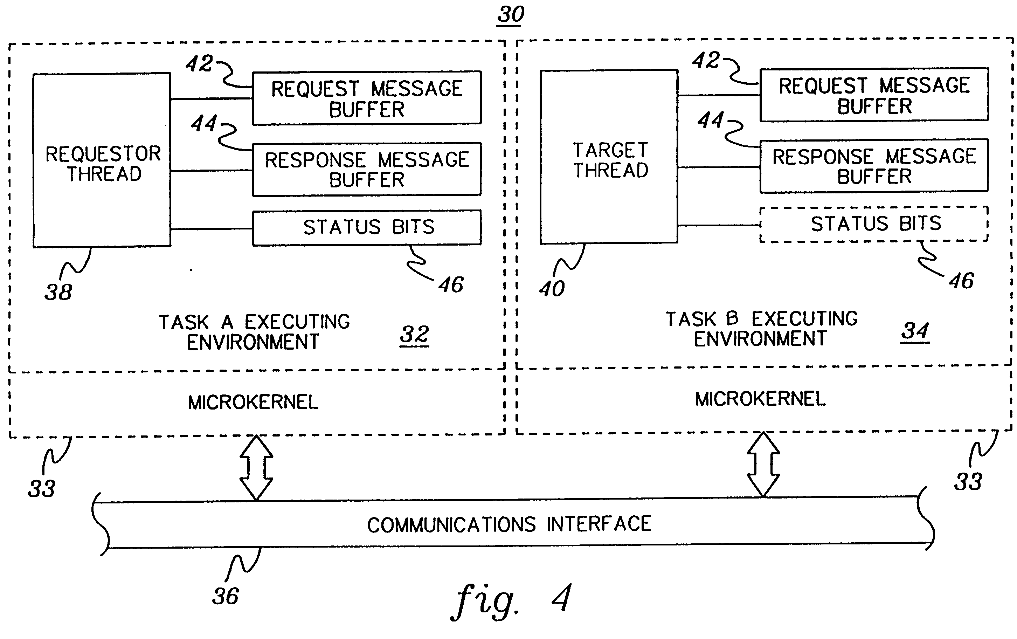

As shown in Fig. 3, every processing node 12 in the parallel data processing environment has a single, pre-allocated address space "ADDR. 0", "ADDR. 1", "ADDR. 2" and "ADDR. 3" associated therewith; i.e., the complete address space is multi-threaded. Such an environment is referred to as a distributed memory processing environment. Each kernel/application interface 19 makes available to its processing node the same global functions as those available at all other processing nodes. The executing of data within a given address space can either affect that address space or produce an equivalent effect in an address space of an object named within the data, i.e., through the communications interface 16 (Fig. 2).

In the distributed memory, parallel processing environment of Figs. 1-3 a parallel job consisting of multiple tasks is executed in disjoint address spaces. System requests require interrupt driven interaction between kernels executing in and controlling the tasks in these distinct address spaces. The goal of the present invention is to provide a low overhead, symmetric mechanism for this interaction, both for the case where a request can be handled locally and where remote execution of the request is required. Traditional RPC mechanisms are believed to be inadequate because of their inefficiency and asymmetry; i.e., local and remote handling of service requests proceed differently.

Pursuant to the present invention, an eXternal Procedure Call (XPC) is provided which allows a process (target thread) the same or separate from the calling process (requestor thread) to be called and executed (and the results returned to the calling process) without requiring a full context switch between processes (tasks) either locally or remotely. This is accomplished by running a called procedure using a subroutine call and invoking the subroutine call (also referred to herein as location independent code) either from within the calling process (in the event the called procedure is handled locally by the same processor) or from within a remote process running on a remote processor (in the event the called procedure is handled remotely). If the called process must be handled remotely, the remote process is interrupted and, for example, a new thread (target thread) in that remote process is obtained to make the necessary subroutine call. If the called procedure can be handled locally, however, not even a thread context switch is required. This is because the running thread of the running process can make the subroutine call itself on its own stack in its own environment.

Thus, an XPC accomplishes the same object as an RPC without the overhead of making a full context switch between processes. (Obviously, a context switch between processes requires the saving of many parameters, which is a time consuming operation detrimental to system performance.) Further, even when an XPC is handled remotely, at most only a thread context switch is needed, which is much less costly than a full process context switch (as required with an RPC). When the XPC is handled locally, even greater performance savings is achieved since a thread context switch is not required. An XPC is essentially a peer-to-peer procedure call (in contrast to an RPC client process to server process procedure call).

An implementation of a procedure call using a system coded with XPC function capability pursuant to the present invention is described herein below with reference to Figs. 4-6.

Fig. 4 depicts a distributed processing system 30 which includes a first (task A) executing environment 32 and a second (task B) executing environment 34. Executing environments 32 & 34 are assumed to comprise separate address locations within a distributed memory, parallel data processing system. Each executing environment includes a microkernel 33 which controls communication between the different executing environments of system 30 via a communications interface 36. Each task (e.g., task A & task B) is assumed to contain multiple threads to be processed within the respective executing environment and a copy of the location independent procedure code.

By way of example, task A executing environment 32 contains a requestor thread 38 which requires a procedure call to a target thread 40 associated with task B executing environment 34. In this scenario, a procedure call from the requestor thread to the target thread is an example of a called process being handled remotely, i.e., away from task A executing environment 32. Preferably allocated to each thread are a request message buffer 42 and a response message buffer 44. In addition, status bits 46 are employed by the requestor thread to track the state of a procedure call transaction. Buffers 42 & 44 and bits 46 (employed pursuant to the present invention) are described further below.

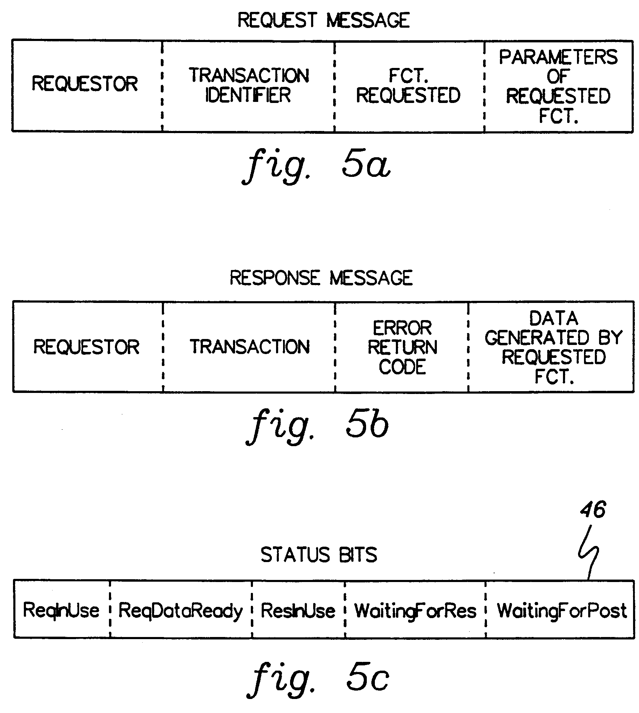

The types of messages employed by an XPC are a "request message" and a "response message" which, as noted, are held in corresponding buffers 42 & 44. In the embodiment of Fig. 5a, a request message comprises a data structure containing information that identifies the requestor thread, transaction identifier, function requested, and parameters of the requested function. The response message of Fig. 5b comprises a data structure containing information that identifies the requestor thread, transaction identifier, an error return code (if applicable), and data generated (if any) by the requested function. In the XPC, each thread of a parallel job has a reference to a unique request message buffer 42 and a unique response message buffer 44. These buffers are pre-allocated and thus always ready for immediate use. The two message references are needed to avoid a race condition created by the possibility of a response arriving before the processor returns from the request function. In fact, in the case of a request handled in the local address space, any response generated will always be in place before the processor returns from the request function.

Fig. 5c depicts one embodiment of a set of bit flags 46 preferably associated with the thread making a request. These bit flags describe the state of the transaction and are defined as follows:

| | |
|---|---|
| ■ ReqInUse | Request message buffer is opened for access. |
| ■ ReqDataReady | Request message buffer is packed. |
| ■ ResInUse | Response message buffer is opened for access. |
| ■ WaitingForRes | Requestor is waiting for a response message. |
| ■ WaitingForPost | Requestor has blocked and will need to be posted. |

Pointers to the associated request message buffer, response message buffer and name of an XPC requestor (if location independent code is to execute) are maintained per thread. Use of an XPC operation pursuant to the present invention involves packaging a request message, making a request procedure call, and waiting for and appraising the response to the request procedure call, i.e., where appropriate. By way of example, the following primitive functions could be employed:

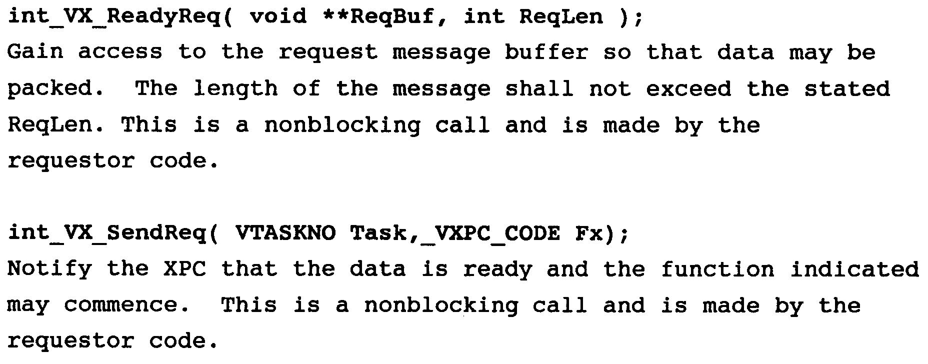

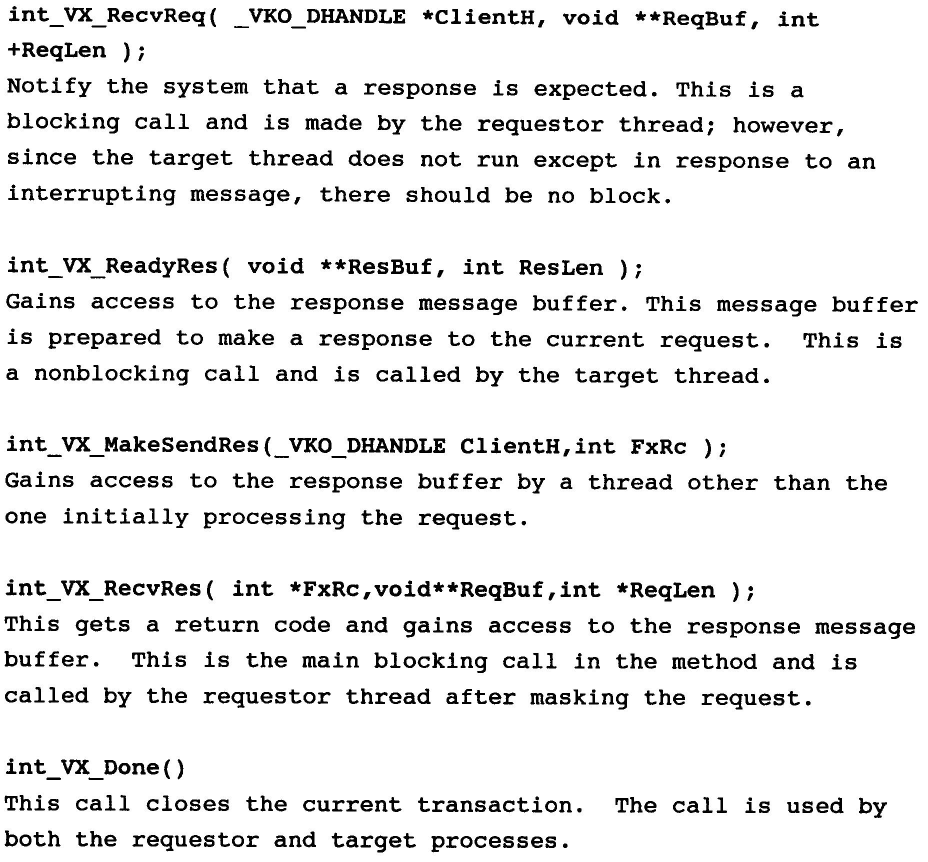

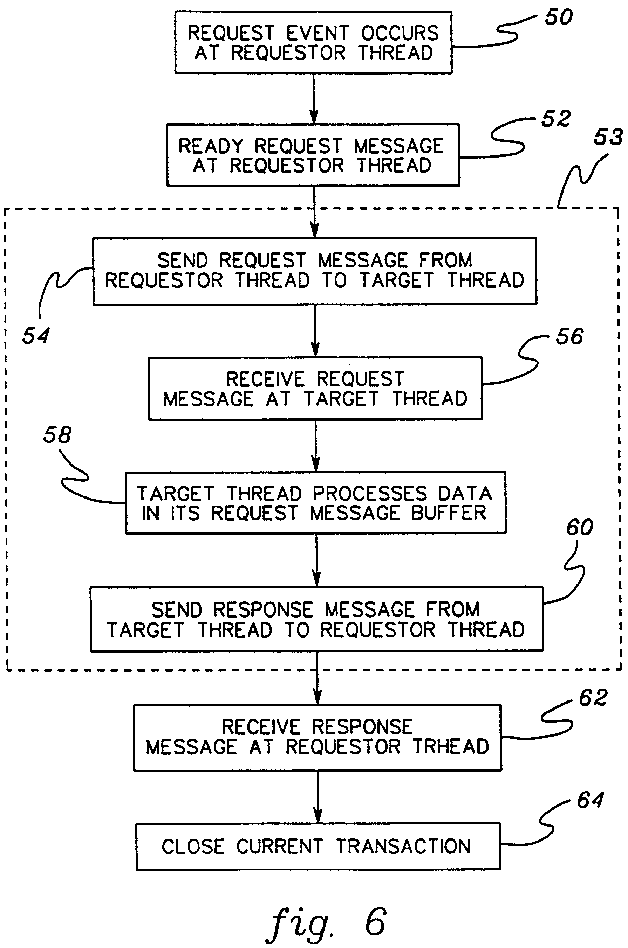

Pursuant to the present invention, the above-noted primitive functions are employed by a system programmer to produce a location independent code sequence which comprises the actual subroutine called by a target thread in processing a called procedure. A location independent code subroutine for a procedure call, which will vary with each particular implementation, can be readily written by one of ordinary skill in the art. However, a general outline of procedure call processing is presented in Fig. 6.

Initially, a request occurs at a requestor thread of a task employing code written with XPC, 50 "Request Event Occurs At Requestor Thread." Then, in all operational modes, the parameters for a requested function are assembled in the associated request message buffer of the thread making the XPC base call, 52 "Ready Request Message At Requestor Thread." At this point, processing pursuant to a subject location independent code will depend upon whether the request may be fielded locally or remotely. The commands within phantom line 53 of Fig. 6 assume remote processing.

If a request is to be fielded locally, then from instruction 52 the subject location independent code would be called immediately for execution by the requesting thread. (In such a case, there is no need to send or receive the request message, i.e., the message is already within the environment where it will be executed.) Conversely, if the request must be fielded by a remote kernel, then the request message in the request message buffer of the requestor thread is sent to that kernel, and in particular to the request message buffer of the target thread, 54 "Send Request Message From Requestor Thread To Target Thread." Again, the request message is received at the request message buffer associated with the target thread, 56 "Receive Request Message At Target Thread." Sending of the request to the target task is accomplished via an interrupt or, if desired, by polling. In either the local or remote case, the subject location independent code (which comprises an XPC coded function and is prestored at each kernel of the distributed system) executes using data placed in the request message buffer of the thread that will execute the requested function. This is the requesting thread in a local case and an XPC interrupt thread (or target thread) in the remote case, 58 "Target Thread Processes Data In Its Request Message Buffer." Thus, the subject location independent code has symmetry between local and remote processes.

Location independent code may be programmed by the system programmer to not generate a response or error according to the needs of a given XPC based routine. This may be determined at run time and according to the calling parameters of the original call to the location independent code. However, when the location independent code does generate an error or response, data is placed in the response message buffer of the executing thread (target thread). In the remote case, this response (or error signal) is then sent from the target thread to the requestor thread, 60 "Send Response Message From Target Thread To Requestor Thread." (Alternatively, after data has been placed into the response message buffer, location independent code could notify the XPC system to determine whether it is executing data using a calling local thread (in which case data is already in the correct response buffer) or whether it is executing using a remote XPC interrupt thread, in which case the response message buffer is sent to the requestor thread.)

In location independent code employing XPC, a requestor thread may run time parameterize to be waiting for a response, or the thread may asynchronously continue execution without waiting for a response. If the requestor thread has been coded to wait for a response, then that response is placed in the requestor thread's response message buffer, 62 "Receive Response Message At Requestor Thread." In such a case, this would terminate the XPC portion of the code, 64 "Close Current Transaction." When the requestor has been coded to make a request and then continue execution without waiting for a response, then any response made by the target thread will generate an asynchronous exception at the requestor thread.

To be correct, the requestor thread must be coded such that both it and the location independent code agree on a protocol for all responses. The location independent code may code errors in the same fashion. When, by the above described method, an error response reaches a requestor thread, it has returned to the caller of the XPC function if the thread has been coded to wait. When the XPC function is used to program an asynchronous function, local execution will still use regular subroutine interfaces, and for this reason, the request will be fully processed before control is returned to the requestor thread. When asynchronous, the request involves a message to a remote kernel, and control is returned to the requestor thread immediately after a message is sent. Thus, any error or response must generate an asynchronous exception to the requestor. (These exceptions may be trapped through functions that are not directly part of XPC processing.)

By way of further example, sample requestor code and location independent (target) code in C language pursuant to the present invention are presented below.

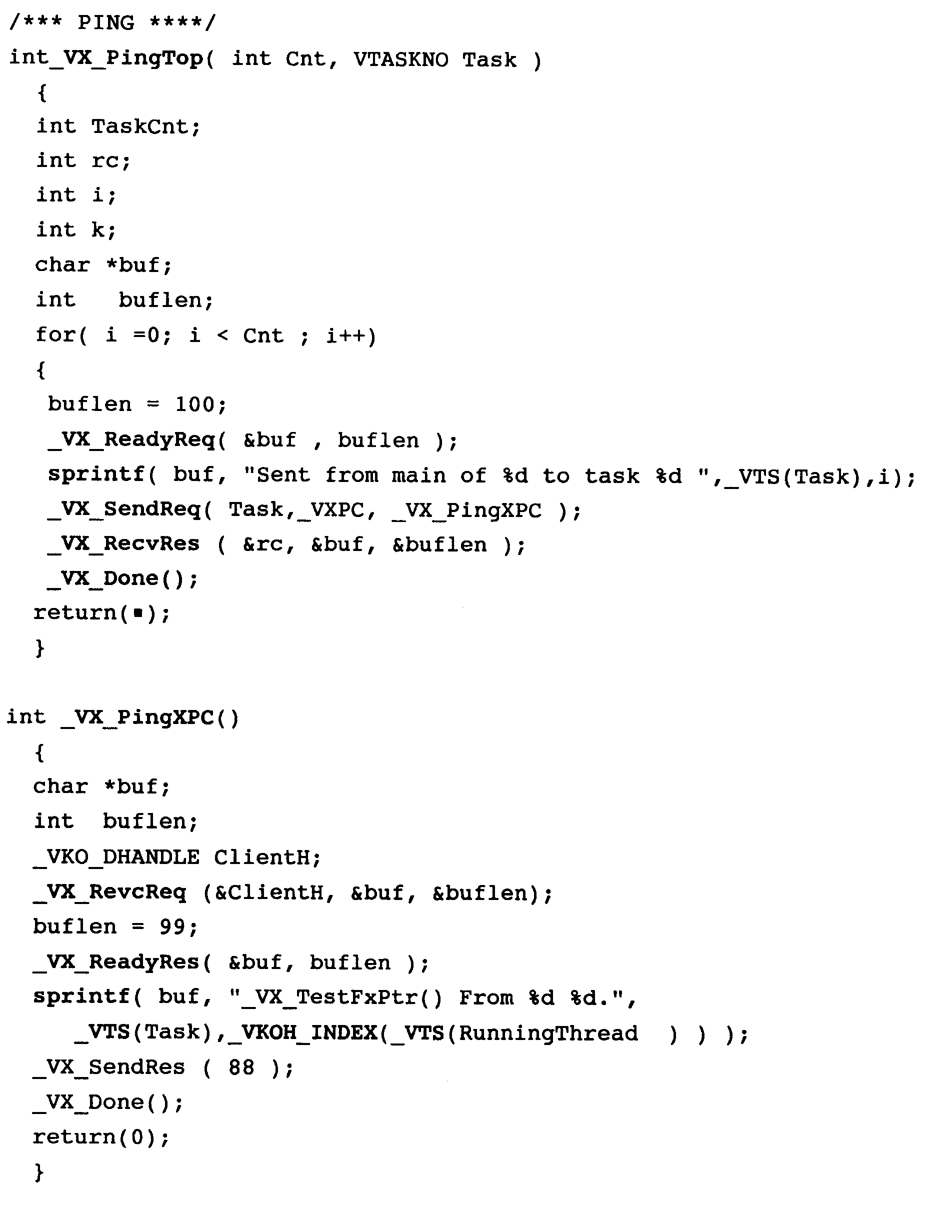

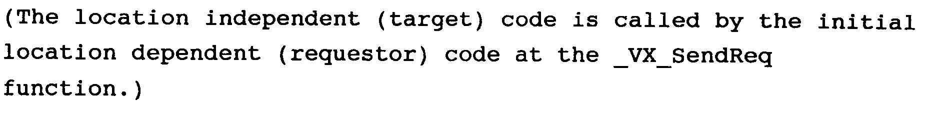

To summarize, an XPC code pursuant to the present invention requires no process context switch from a requestor thread making a system call. If a required service can be provided locally, the local kernel does so, using only subroutine call interfaces. Otherwise, an interrupt generating message is sent directly to the kernel controlling the target task and address space. The remote kernel fields the request by accessing a context (target thread) equivalent to that of a thread. No context switch occurs at the remote node beyond that which may be required to save system state upon an interrupt. An XPC routine may be coded to operate either synchronously, so that the requestor thread blocks waiting for a response, or asynchronously such that the requestor thread continues without waiting for a response or error message in return. The specific behavior is determined by the system programmer using XPC code functions to implement a parallel job wide system. XPC base functions may be programmed to operate in either fashion according to run time calling parameters.

The novel external procedure call provided herein accomplishes the same function as a standard RPC without the overhead of making a full context switch between processes. When an XPC is handled locally (i.e., at the processing node executing the requestor thread), not even a thread context switch is required. When the XPC is handled remotely, only a thread context switch might be needed, which is much less costly in terms of processing overhead than a full process context switch, as required by an RPC. An XPC is essentially a peer-to-peer procedure call.

Although specific embodiments of the present invention have been illustrated in the accompanying drawings and described in the foregoing detailed description, it will be understood that the invention is not limited to the particular embodiments described herein, but is capable of numerous rearrangements, modifications and substitutions without departing from the scope of the invention. The following claims are intended to encompass all such modifications.

## Claims

1. In a distributed processing environment having multiple processing nodes for parallel processing different tasks of a parallel job, said parallel job including a plurality of tasks each having multiple processing threads, a process for executing a procedure at a target thread of one of said plurality of tasks, said procedure executing process comprising the steps of:
(a) preassociating call/execute procedure code with each of said multiple processing nodes of said distributed processing environment such that for each processing node at least one thread executed thereby can directly access said call/execute procedure code without requiring a task context switch;
(b) executing a requestor thread at one of said multiple processing nodes of said distributed processing environment, said requestor thread calling for execution of the procedure at the target thread; and
(c) executing the procedure at said target thread, said executing of said procedure including processing said call/execute procedure code within said target thread such that said procedure is executed without employing context switching between different tasks of said parallel process.

2. The procedure executing process of claim 1, further comprising the step of allocating a request message buffer to each potential requestor thread of said parallel job, and wherein said executing step (b) includes loading said requestor thread's allocated request message buffer with parameters calling for execution of the procedure at the target thread.

3. The procedure executing process of claim 2, further comprising the step of executing the called procedure locally within the requestor thread when possible such that the target thread comprises the requestor thread and no thread context switching is required at the processing node executing said requestor thread in order to execute said procedure.

4. The procedure executing process of claim 3, further comprising the step of allocating a response message buffer to each processing thread of said parallel job, and wherein said procedure executing step (c) includes loading said requestor thread's allocated response message buffer with a result from execution of said procedure.

5. The procedure executing process of claim 2, wherein said executing step (c) occurs at a remote processing node within said distributed processing environment from the processing node performing said requestor thread executing step (b).

6. The procedure executing process of claim 5, further comprising the step of communicating to said target thread said requestor thread's call for execution of said procedure, said communicating step including sending loaded parameters from said requestor thread's request message buffer to a request message buffer allocated to said target thread.

7. The procedure executing process of claim 6, further comprising the steps of interrupting processing at said remote processing node and running said target thread for accessing said call/execute procedure code preassociated with said remote processing node.

8. The procedure executing process of claim 6, wherein said procedure executing step (c) includes executing said call procedure using parameters sent to said request message buffer allocated to said target thread.

9. The procedure executing process of claim 6, further comprising the step of allocating a response message buffer to each processing thread of said parallel job, and wherein said procedure executing step (c) includes loading said target thread's allocated response message buffer with a result from execution of said procedure.

10. The procedure executing process of claim 9, further comprising the step of communicating said result from said target thread's allocated response message buffer to said requestor thread's allocated response message buffer.

11. The procedure executing process of claim 6, further comprising the step of providing signal bits for said requestor thread to track calling and processing of said procedure by said target thread.

12. The procedure executing process of claim 1, further comprising the step of holding further processing of said requestor thread in said step (b) until said procedure has been completed by said target thread in said step (c).

13. A process for executing a procedure at a target thread comprising one of multiple threads of a parallel job, said procedure executing process being implemented in a distributed processing environment having multiple processing nodes, said procedure executing process comprising the steps of:
(a) associating call/execute procedure code with each of said multiple processing nodes of said distributed processing environment such that at least one thread of said multiple threads of said parallel job can directly access said call/execute procedure code when executing at a processing node of said distributed processing environment;
(b) allocating a unique request message buffer and a unique response message buffer to each thread of the multiple threads of said parallel job; and
(c) in response to a requestor thread loading its allocated request message buffer with parameters calling for execution of the procedure at the target thread, executing said call/execute procedure code associated with the processing node executing said target thread, said executing of said call/execute procedure code including processing said call/execute procedure code from within said target thread such that said procedure is executed by the corresponding processing node without employing context switching between different tasks of said parallel job.

14. The procedure executing process of claim 13, wherein when said procedure can be executed locally within the processing node processing said requestor thread, said target thread comprises said requestor thread and no context switch is required between threads of said parallel job.

15. The procedure executing process of claim 14, further comprising the step of loading said requestor thread's allocated response message buffer with a result from execution of said procedure.

16. The procedure executing process of claim 13, wherein said executing step (c) occurs at a remote processing node within said distributed processing environment from a processing node handling said requestor thread, and wherein said process further comprises the step of communicating to said target thread said requestor thread's call for execution of said procedure, said communicating step including sending loaded parameters from said requestor thread's request message buffer to a request message buffer allocated to said target thread.

17. The procedure executing process of claim 16, further comprising the steps of interrupting processing at said remote processing node and running said target thread for accessing said call/execute procedure code associated with said remote processing node.

18. The procedure executing process of claim 16, further comprising the steps of loading said target thread's allocated response message buffer with a result from execution of said procedure, and communicating said results from said target thread's allocated response message buffer to the response message buffer allocated to said requestor thread.

19. The procedure executing process of claim 13, further comprising the step of providing signal bits for said requestor thread to track calling and processing of said procedure by said target thread.

20. The procedure executing process of claim 13, further comprising the step of holding further processing of said requestor thread pending completion of said procedure by said target thread.

21. A system for executing a procedure at a target thread comprising one of a plurality of threads of a parallel job, said system comprising:
a distributed processing environment having multiple processing nodes for processing in parallel said parallel job;
a plurality of operating kernels, each kernel being associated with one of said processing nodes of said distributed processing environment;
call procedure code associated with each of said plurality of kernels within said distributed processing environment, said call procedure code being directly callable at each processing node by a thread executed therein without requiring a task context switch;
a unique request message buffer and response message buffer for each thread of said parallel job;
means for loading parameters into a requestor thread's request message buffer upon execution of a procedure call by said requestor thread;
means for sending said parameters from said requestor thread's request message buffer to a request message buffer associated with said target thread; and
upon receipt of said parameters, means for executing said call procedure code within said target thread without a task context switch.

22. The system of claim 21, further comprising means for loading a result from execution of said procedure in the target thread's response message buffer.

23. The system of claim 22, further comprising means for transferring said result from said response message buffer associated with said target thread to said requestor thread's response message buffer.

24. The system of claim 21, further comprising signal bits associated with said requestor thread for said requestor thread to track calling and processing of said procedure by said target thread.
